(19) Europäisches Patentamt
European Patent Office
Office européen des brevets

(11) **EP 3 412 012 B1**

(12) **FASCICULE DE BREVET EUROPEEN**

(45) Date de publication et mention
de la délivrance du brevet:
**11.09.2019 Bulletin 2019/37**

(51) Int Cl.:
***H04L 27/00*** *(2006.01)*     ***H04L 27/26*** *(2006.01)*

(21) Numéro de dépôt: **17702399.1**

(22) Date de dépôt: **03.02.2017**

(86) Numéro de dépôt international:
**PCT/EP2017/052396**

(87) Numéro de publication internationale:
**WO 2017/134233 (10.08.2017 Gazette 2017/32)**

(54) **PROCÉDÉ D'ESTIMATION DE PARAMÈTRES DE SIGNAUX CONTENUS DANS UNE BANDE DE FRÉQUENCES**

VERFAHREN ZUM SCHÄTZEN VON PARAMETERN VON SIGNALEN IN EINEM FREQUENZBAND

METHOD FOR ESTIMATING PARAMETERS OF SIGNALS CONTAINED IN A FREQUENCY BAND

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.02.2016 FR 1650945**

(43) Date de publication de la demande:
**12.12.2018 Bulletin 2018/50**

(73) Titulaire: **ZODIAC DATA SYSTEMS**
**91978 Courtaboeuf Cedex (FR)**

(72) Inventeurs:
• **GOULDIEFF, Vincent**
**35700 Rennes (FR)**
• **DAUMONT, Steredenn**
**14740 Bretteville l'Orgueilleuse (FR)**
• **PALICOT, Jacques**
**35000 Rennes (FR)**
• **THOMAS, Yann**
**14000 CAEN (FR)**

(74) Mandataire: **Regimbeau**
**20, rue de Chazelles**
**75847 Paris Cedex 17 (FR)**

(56) Documents cités:
• **REBEIZ E ET AL: "Low Complexity Feature-Based Modulation Classifier and Its Non-Asymptotic Analysis", GLOBAL TELECOMMUNICATIONS CONFERENCE (GLOBECOM 2011), 2011 IEEE, IEEE, 5 décembre 2011 (2011-12-05), pages 1-5, XP032119505, DOI: 10.1109/GLOCOM.2011.6134309 ISBN: 978-1-4244-9266-4**
• **ZHIQIANG WU ET AL: "Blind cyclostationary carrier frequency and symbol rate estimation for underwater acoustic communication", COMMUNICATIONS (ICC), 2012 IEEE INTERNATIONAL CONFERENCE ON, IEEE, 10 juin 2012 (2012-06-10), pages 3482-3486, XP032274362, DOI: 10.1109/ICC.2012.6364536 ISBN: 978-1-4577-2052-9**
• **RAMKUMAR B: "Automatic modulation classification for cognitive radios using cyclic feature detection", IEEE CIRCUITS AND SYSTEMS MAGAZINE, IEEE SERVICE CENTER, NEW YORK, NY, US, vol. 9, no. 2, 1 avril 2009 (2009-04-01), pages 27-45, XP011262072, ISSN: 1531-636X**

**Description**

DOMAINE TECHNIQUE GENERAL

L'invention concerne le domaine des télécommunications et notamment le domaine des systèmes et procédés permettant d'estimer certains paramètres constitutifs d'un ou de plusieurs signaux ou porteuses modulées contenus dans une même bande de fréquences.

ETAT DE LA TECHNIQUE

La multiplication des systèmes de télécommunications engendre un besoin de réutilisation des canaux afin de satisfaire la demande en termes de bande passante et de qualité de service. Une telle réutilisation est possible grâce aux réseaux cellulaires ou spots.

La densification de ces réseaux associée à une réutilisation de certains canaux entre cellules proches ou adjacentes engendre des situations où un terminal reçoit un signal d'intérêt entaché d'un ou plusieurs signaux interférents dont la puissance se rapproche de celle du signal utile. Cette concomitance de signaux utilisant la même ressource fréquentielle peut selon les cas être involontaire (interférence co-canal) ou délibérée (la connaissance a priori de l'utilisation de la même fréquence par un autre émetteur est utilisée pour réceptionner correctement les télécommunications et optimiser l'utilisation du spectre).

Le taux d'erreur des terminaux d'architecture classique est alors très dégradé et il faut employer des algorithmes de séparation ou de réduction d'interférences en vue d'isoler le signal utile.

La connaissance de certaines caractéristiques des signaux présents dans la bande considérée est nécessaire au bon fonctionnement de ces algorithmes.

Ces caractéristiques sont, par exemple, la modulation utilisée, la puissance, la fréquence porteuse ou encore le rythme symbole de chacun des signaux présents dans la bande considérée.

On connait des méthodes d'estimation des caractéristiques du signal principal lorsque les signaux interférents sont de très faibles niveaux relatifs :

- Pour l'estimation des modulations :
  On pourra se référer aux documents [Swami & Sadler, 2000] et [Ramkumar, 2009] ou également aux documents [Reichert, 1992] et [Rebeiz, 2011].
  Le document [Ramkumar, 2009] exploite des fonctions cyclostationnaires usuelles (fonction d'autocorrélation cyclique (en anglais, « Cyclic Autocorrelation Function » (CAF)), fonction de corrélation spectrale [en anglais, « Spectral Correlation Function » (SCF) et fonction de cohérence spectrale (en anglais, « Spectral Coherence Function » (SOF)), desquelles sont extraites des caractéristiques par une méthode n'exploitant qu'une partie des pics obtenus.
  Le document [Reichert, 1992] s'appuie sur la transformée MPT (en anglais, « Mth Power nonlinear Transform ») précédemment proposée dans le document [Mazo, 1978] en vue d'estimer la fréquence porteuse et le rythme symbole d'un signal d'intérêt en l'absence de signaux interférents.
  Le document [Rebeiz, 2011] extrait de manière non-aveugle des pics de la SOF (l'auteur suppose connu leurs positions). De plus, il n'exploite que l'amplitude des pics et non leur position spectrale pour effectuer la classification.
- Pour l'estimation d'autres paramètres (puissances, fréquences porteuses, rythmes symboles, etc.) :
  On pourra se référer au document [Proakis, 2007], ainsi qu'au document [Wu, 2012]. Dans ce dernier document, l'auteur utilise la SOF classique en vue d'estimer le rythme symbole et la fréquence porteuse d'un signal en l'absence d'interférent.

D'autres techniques ont été proposées pour l'estimation de certains paramètres lorsque plusieurs signaux sont présents dans la même bande de fréquence. Celles-ci utilisent des transformées dans le domaine spectral ou des statistiques d'ordres supérieurs. A ce titre, on pourra se référer, pour l'estimation des modulations :

- Au document [Zaerin & Seyfe, 2012] qui présente une méthode d'estimation des modulations basée sur des « cumulants » d'ordres supérieurs. Cette technique est efficace pour estimer les constellations des signaux utiles et des interférents. Toutefois, elle se révèle inefficace lorsque les SINR (en anglais, « *Signal to Interference plus Noise Ratio* », qui définissent le rapport entre la puissance du signal d'intérêt et la puissance combinée du signal interférent et du bruit additif) sont faibles, soit quand la puissance de l'interférent est comparable à celle du signal d'intérêt.
- Au document [Guenther, 2010], dans lequel il est utilisé une fonction spectrale de corrélation (en anglais « Spectral Correlation Function », (SCF)) pour l'estimation des caractéristiques. Cependant, le caractère coopératif de la méthode présentée (on connait certains paramètres a priori) en rend son utilisation impossible dès lors que les signaux interférents présentent un fort niveau et qu'aucune information a priori ne peut être utilisée. De plus, il n'exploite pas les valeurs de l'amplitude des pics de la SCF.

Ainsi, les techniques connues présentent de nombreux inconvénients.

PRESENTATION DE L'INVENTION

L'invention propose de pallier les inconvénients précités.

A cet effet, l'invention propose un procédé d'estimation de paramètres constitutifs d'un signal seul ou de signaux mélangés en fréquence constitué des étapes suivantes :

- réception d'un signal seul ou d'un mélange de signaux y(t) dans une bande de fréquences donnée ;
- détermination pour L, nombre réel strictement positif pris dans un ensemble de q, q strictement positif, valeurs prédéterminées {$L_1$; ... ;$L_q$} de la fonction de corrélation spectrale définie ci-dessous :

$$ LSCF_y(f, \alpha) \triangleq \sqrt[L]{\left| \mathcal{F}_\tau [R_{y^L}(\tau, \alpha)](f) \right|} $$

$$ R_{y^L}(\tau, \alpha) = \frac{1}{N} \sum_{n=0}^{N} y^L(n) y^{*L}(n - \tau) e^{-j2\pi\alpha n} $$

où          est la fonction d'autocorrélation cyclique de l'élévation à la puissance L de la version échantillonné y(n) du signal y(t) et où $F_\tau[.]$ est la transformée de Fourier et où, pour chaque q, $\alpha$ peut indépendamment prendre une ou plusieurs valeurs discrètes et/ou parcourir une ou plusieurs plages de valeurs ;

- traitement de chaque tranformation $LSCFy(f,\alpha)$ L étant pris dans un ensemble de q, q strictement positif, valeurs prédéterminées {$L_1$; ... ;$L_q$} pour en extraire un ensemble de pics $p_i$, c'est-à-dire de maxima locaux détectés selon les variables f et $\alpha$ ou selon la seule variable f pour chaque valeur discrète de a, chacun de ces pics étant caractérisé par un triplet {$LAp_i$, $LFp_i$, $L\alpha p_i$} où $LFp_i$ et $L\alpha p_i$ sont respectivement la fréquence et la fréquence cyclique à laquelle il se situe et $LAp_i$ son amplitude ;

- identification de groupes de triplets {$LAp_i$, $LFp_i$, $L\alpha p_i$} comme étant la signature laissée par un ensemble de paramètres constitutifs de signaux présents dans la bande de fréquence donnée.

Dans le contexte de l'invention, pour M réel, il est utile d'utiliser le cas particulier de la fonction MPT définie comme suit :

$$ MPT_y(f) \triangleq \sqrt[M]{\mathcal{F}_\tau [r_{y^M}(\tau)](f)} $$

-          ,

où $F\tau[.]$ est la transformée de Fourier, $ryM(\tau)$ est la fonction d'autocorrélation de l'élévation à la puissance M du signal échantillonné y(n) que l'on aura éventuellement normalisé et centré au préalable. Lorsque l'ordre M et l'ordre L sont identiques, la fonction MPT correspond à la fonction LSCF prise pour $\alpha$ nul : $LSCFy(f, 0) = MPT_y(f) \setminus L = M.$ La formulation générale utilisant la fonction LSCF inclut donc le cas particulier de la fonction MPT.

Lorsque l'ordre M et l'ordre L sont identiques, la fonction MPT correspond à la fonction $LSCF$ prise pour $\alpha$ nul : $LSCF_y(f, 0) = MPT_y(f) \setminus L = M.$ La formulation générale utilisant la fonction $LSCF$ inclut le cas particulier de la fonction $MPT$.

La phase d'identification peut s'appuyer sur plusieurs méthodes de classification des pics détectés. Toutes reposent sur les propriétés intrinsèques de chaque fonction $LSCF$ (respectivement $MPT$) qui génère des raies spectrales caractéristiques du mélange, qu'on peut ainsi qualifier de signature. Les fréquences auxquelles apparaissent ces raies sont des combinaisons des rythmes et des fréquences porteuses résiduelles, alors que leurs profils d'amplitudes selon l'ordre L (respectivement M) des transformations spectrales sont principalement fonction des modulations (constellation et filtre de mise en forme) et des amplitudes des signaux du mélange.

L'invention se fonde sur la richesse des combinaisons de transformations spectrales observables et l'exploitation conjointe des positions et des amplitudes des pics. En effet, le choix de certains ordres de transformation (L ou M) associé à la possibilité d'explorer une dimension supplémentaire de variable (la fréquence cyclique a) rend possible une détermination séparée, sans connaissance a priori, des paramètres constitutifs du mélange de signaux. En particulier, les valeurs d'intérêt pour L (ou M) dépendent des constellations envisagées, et peuvent typiquement être sélectionnées dans l'ensemble {2, 4, 8} pour caractériser les constellations les plus courantes.

L'invention est avantageusement complétée par les dispositions suivantes, prises seules ou en une quelconque de leur combinaison techniquement possible.

L'étape de détermination est mise en oeuvre dans un premier temps, en considérant la fréquence cyclique $\alpha$ comme étant la valeur discrète nulle (à savoir la fonction $M$PT) pour identifier des groupes de triplets {LAp$_i$, LFp$_i$, L$\alpha$p$_i$ = 0}, et dans un deuxième temps, en sélectionnant un ensemble de valeurs de l'ordre L et de valeurs discrètes ou de plages de variation de $\alpha \neq 0$ déterminés en fonction des résultats de la première application du procédé.

La racine Lième du module de la transformée de Fourier est remplacée dans les formules de transformations spectrales par toute autre puissance ou un logarithme ou toute autre fonction réelle monotone du module de la transformée de Fourier.

Le procédé comprend en outre un prétraitement du signal reçu comprenant les sous-étapes suivantes :

- détermination de la densité spectrale de puissance de y(n) ;
- traitement de la densité spectrale de puissance pour estimer le niveau de bruit contenu dans le mélange ;
- traitement de normalisation et de centrage du mélange de signaux à partir des caractéristiques précédemment obtenues, la détermination des fonctions $L$SCF pour certaines valeurs de L prises dans {L$_1$, ... L$_q$}, étant alors fondée sur le mélange normalisé et centré.

L'identification comprend une étape de comparaison de groupes de triplets {LAp$_i$, LFp$_i$, L$\alpha$p$_i$} obtenus à des signatures prédéterminées à l'avance, c'est à dire des triplets ou couples correspondant à un jeu d'hypothèses de paramètres constitutifs des signaux présents dans le mélange.

L'identification permet l'estimation des modulations et des amplitudes des signaux en mettant en oeuvre un algorithme de classification des pics selon la fréquence à laquelle ils sont situés puis une recherche par calcul de paramètres constitutifs du mélange créant des signatures ressemblantes aux groupes ainsi formés.

L'estimation des modulations et des amplitudes du mélange de signaux met en oeuvre un algorithme de recherche de maximum de vraisemblance des pics obtenus utilisant des modèles analytiques de signatures et de probabilité des écarts observés.

L'estimation des modulations de chacun des signaux met en oeuvre un algorithme qui recherche le minimum de l'Erreur Quadratique Moyenne (EQM) entre les différents triplets ou couples et une base de signatures préablement établie à partir de valeurs théoriques ou expérimentales.

Les valeurs de L sont choisies en fonction des modulations présentes dans des normes de télécommunications considérées.

L'identification permet l'estimation des fréquences porteuses résiduelles et des rythmes symboles à partir des valeurs LFp$_i$.

L'identification permet l'estimation du nombre de signaux N$_u$ à partir des valeurs LFp$_i$.

PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :

- la figure 1 illustre schématiquement des étapes d'un procédé selon l'invention ;
- la figure 2 illustre schématiquement des détails des étapes du procédé de la figure 1.

Sur l'ensemble des figures les éléments similaires portent des références identiques.

DESCRIPTION DETAILLEE DE L'INVENTION

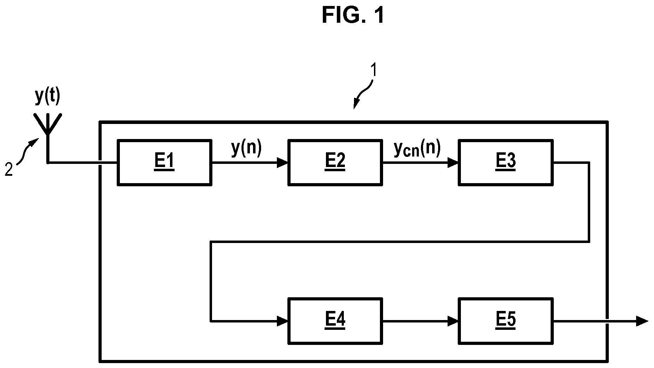

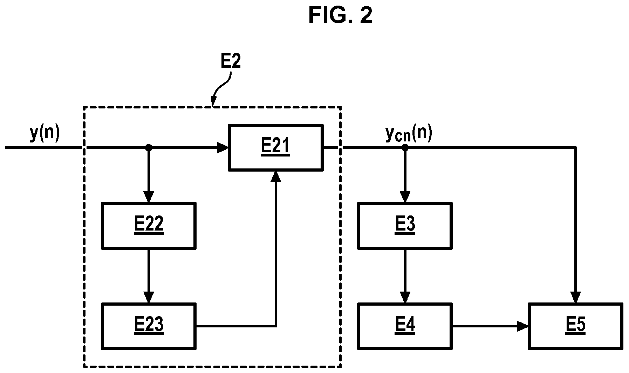

Dans le cadre d'un procédé d'estimation de paramètres constitutifs d'un ou de plusieurs signaux partiellement ou totalement superposés en fréquence dans une bande donnée, décrit en relation avec les **figures 1** et **2**, un signal y(t) est reçu E0 par un récepteur 1 radio comprenant une ou plusieurs antennes 2.

Le signal composite y(t) reçu est un signal seul ou un mélange de plusieurs signaux contenus dans une bande de fréquences et s'exprime temporellement de la manière suivante :

$$y(t) = \sum_{u=1}^{N_u} a_u(t) \cdot e^{j \cdot (2\pi \cdot f_u(t) \cdot t + \phi_u)} \cdot \sum_{k=1}^{N} s_u(k) \cdot h_u \left( t - \frac{k}{R_u(t)} - \tau_u \right) + \omega(t)$$

Avec

- $\omega$ : le bruit blanc gaussien additif;
- $N_u$ : le nombre de signaux contenus dans la bande de fréquences considérée ;
- $a_u$ : l'amplitude du signal u;
- $f_u$ : la fréquence porteuse du signal u;
- $\phi_u$ : la phase à l'origine du signal u ;
- $s_u$ : les symboles émis par l'émetteuru;
- $R_u$ : le rythme symboles de l'émetteur u ;
- $\tau_u$ : le retard initial du signal u ;
- $h_u$ : le filtre de mise en forme du signal u.

L'objectif du procédé est d'estimer les paramètres constitutifs de chaque signal présent dans la bande de fréquences considérée. On s'interesse en particulier, pour un signal d'indice u, à son rythme $R_u$, à son décalage de fréquence porteuse $f_u$, à son amplitude $a_u$, à sa constellation $C_u$ dont sont issus les symboles $s_u$ et éventuellement à son filtre de mise en forme de l'impulsion $h_u$.

Dans une première étape, le signal composite y(t) est numérisé E1 via une chaine de réception classique. Une telle chaine de réception comprend classiquement un filtre radio-fréquence associé à un amplificateur faible bruit, suivi d'une mélangeur permettant le passage d'une bande comprenant la bande d'intérêt en bande de base, et enfin d'un échantillonneur. On obtient alors un signal échantillonné y(n) où n représente un indice d'échantillon. y(n) est notamment défini par :

$$y(n) = \sum_{u=1}^{N_u} a_u(n) \cdot e^{j \cdot (2\pi \cdot f_u'(n) \cdot n + \phi_u)} \cdot \sum_{k=1}^{N} s_u(k) \cdot h_u \left( n - \frac{k}{R_u(n)} - \tau_u \right) + \omega(n)$$

avec $f'_u$ correspondant à la fréquence porteuse résiduelle normalisée du signal u.

De manière facultative pour faciliter les traitements ultérieurs, le signal numérisé y(n) est, dans une seconde étape, pré-traité E2.

Ce prétraitement E2 comprend une sous-étape de centrage et de normalisation E21. Ce pré-traitement E2 permet d'obtenir un signal $y_{cn}(n)$ tel que sa densité spectrale de puissance est centrée en 0 et tel que :

$$\sum_{u=1}^{N_u} \bar{a}_u^2 = 1 \text{ , avec } \bar{a}_u = \frac{1}{N} \sum_{n=1}^{N} a_u(n) .$$

Cette sous-étape est éventuellement effectuée à partir de l'estimation E23 du niveau de bruit $\sigma_\omega^2$ contenu dans le mélange, et éventuellement, pour chaque signal du mélange, de sa bande utile $B_u$, ces paramètres étant possiblement estimés E23 au moyen d'une détermination E22 de la densité spectrale de puissance du signal y(n). Ceci est autorisé par la détection du rapport signal à bruit. La densité spectrale de puissance permet également de déterminer la bande de fréquences utile et la fréquence centrale de cette bande, comme explicité dans le document [Proakis, 2007].

De manière très générale, on détermine dans une troisième étape E3, pour différentes valeurs de L prises dans un ensemble $\{L_1, ... L_q\}$ de q (q strictement positif) nombres réels strictement positifs qui calcule la fonction de corrélation spectrale définie ci-dessous :

$$LSCF_y(f, \alpha) \triangleq \sqrt[L]{\left| \mathcal{F}_\tau [R_{y^L}(\tau, \alpha)](f) \right|}$$

où $R_{y^L}(\tau, \alpha) = \frac{1}{N} \sum_{n=0}^{N} y^L(n) y^{*L}(n - \tau) e^{-j2\pi\alpha n}$ est la fonction d'autocorrélation cyclique (en anglais, « *cyclic autocorrelation function* », (CAF)) du signal échantillonné y(n) élevé à la puissance L que l'on aura éventuellement normalisé et centré, où $F_\tau[.]$ est la transformée de Fourier et où, pour chaque q, $\alpha$ peut indépendamment prendre une ou plusieurs valeurs discrètes et/ou parcourir une ou plusieurs plages de valeurs.

En particulier, une troisième étape E3 simplifiée consiste à considérer tout d'abord une fréquence cyclique $\alpha$ nulle. Ainsi, pour M, nombre réel strictement positif pris dans un ensemble de q (q strictement positif) valeurs prédéterminées $\{M_1, ... M_q\}$, cela revient alors à calculer la fonction spectrale :

$$MPT_y(f) \triangleq \sqrt[M]{\mathcal{F}_\tau[r_{y^M}(\tau)](f)} \; ,$$

où $r_{yM}(\tau)$ est la fonction d'autocorrélation de l'élévation à la puissance M du signal échantillonné y(n) que l'on aura éventuellement normalisé et centré au préalable. En fonction des résultats obtenus, l'analyse peut être complétée par le calcul de fonctions $LSCFy(f,\alpha{\neq}0)$ limitée n'utilisant qu'un sous-ensemble pertinent de valeurs de L parmi celles de M utilisées au cours de la troisième étape.

Les ordres des transformations spectrales M ou L considérés dépendent des modulations envisagées dans le mélange, typiquement M = L = 2, 4, ou 8 sont suffisantes pour caractériser correctement les paramètres des différents signaux pour les modulations courantes telles que BPSK, QPSK, OQPSK, 8-QAM, 16-QAM, 8-PSK, 16-APSK, 32-APSK.

Ensuite, dans une quatrième étape, chaque tranformation $LSCFy(f,\alpha)$ obtenue pour chaque valeur de L prise dans l'ensemble $\{L_1, ... L_q\}$ est traitée E4 pour en extraire des triplets $\{LAp_i, LFp_i, L\alpha p_i\}$ désignant ses pics $p_i$ selon les deux variables f et $\alpha$ où $LAp_i$ est l'amplitude du pic, $LFp_i$ la fréquence f où il se situe et $L\alpha p_i$ la fréquence cyclique $\alpha$ à laquelle il apparaît.

Lorsqu'on a employé des valeurs discrètes de $\alpha$ pour certaines valeurs de L alors, à chaque valeur de $\alpha$ considérée, les pics ne sont détectés que selon la seule variable f et il s'en suit que $L\alpha p_i$ vaut a. En particulier, quand on utilise la transformation $MPTy(f)$ seule pour M pris dans $\{M_1, ... M_q\}$, ces triplets ont tous une valeur $\alpha$ nulle, ils peuvent donc être réduits à un simple couple $\{MAp_i, MFp_i\}$.

On considère qu'un pic est présent dès lors que la fonction spectrale présente un maximum local, valable sur un intervalle d'une largeur qui peut être, selon les mises en oeuvre, déterminée à l'avance ou de manière adaptative, maximum dont l'amplitude est supérieure ou égale à un seuil qui peut, selon les mises en oeuvre, aussi être déterminé à l'avance ou de manière adaptative. Par exemple, la valeur du seuil peut être choisie en fonction du nombre d'échantillons considérés et/ou du niveau de bruit estimé dans le mélange.

On remarque que les fonctions $LSCFy(f)$ et $MPTy(f)$ sont extraites par une racine Lième ou Mième du module de la transformée de Fourier. L'utilisation d'une autre puissance de la transformée de Fourier, voire même de son logarithme ou d'une quelconque fonction monotone sur les nombres réels positifs, fournit les mêmes positions de pics avec des amplitudes respectivement modifiées par la fonction employée. Il est donc possible d'utiliser ces formules alternatives pour extraire les triplets.

Une fois les différents triplets obtenus, dans une cinquième étape on identifie E5 des groupes de triplets $\{LAp_i, LFp_i, L\alpha p_i\}$ observés comme des signatures caractéristiques laissées par la présence de certains types de signaux dans la bande de fréquences considérée, c'est-à-dire que ces groupes de pics situés à des fréquences particulières suivent un profil d'amplitude en fonction de l'ordre L qui est caractéristique des paramètres constitutifs du mélange: en particulier, cet ensemble de signatures peut indiquer la puissance et/ou la fréquence porteuse et/ou le rythme symbole et/ou le type de modulation des signaux présents dans le mélange ainsi que leur nombre.

Par convention, on considérera que le signal d'intérêt est celui ayant l'amplitude la plus importante. On notera cependant que certaines applications s'intéressent plutôt à des signaux qui se trouveraient masqués par un ou plusieurs signaux utilisant la même ressource fréquentielle mais avec plus forte puissance.

En particulier, il est possible d'utiliser, en vue d'estimer les modulations et les amplitudes de chacun des signaux, différents algorithmes de reconnaissance des signatures les plus probables:

- un algorithme de classification de pics apparaissant dans plusieurs transformations à des fréquences reliées entre elles par une relation simple (identiques, harmoniques ou régulièrement espacées) et ayant pour référence de comparaison une base de données de signatures préalablement établie.

- ou un algorithme d'optimisation basé sur des formules analytiques donnant l'amplitude théorique et la relation de position des pics d'une signature. Dans ce cas, les amplitudes et les modulations des signaux sont estimées de manière conjointe sous la forme du problème d'optimisation suivant : $\{\hat{C}_1,...,\hat{C}_{N_u},\hat{a}_1,...,\hat{a}_{N_u}\}$ = $arg\text{-}max\{c_1,...c_{N_u},a_1,...a_{N_u}\}\kappa$, où $\kappa$ est une fonction de coût strictement monotone selon la vraissemblance de l'ensemble $\{C_1,...,C_{N_u},a_1,...,a_{N_u}\}$ des hypothèses étant donnés des couples $\{MAp_i, MFp_i\}$ ou des triplets $\{LAp_i, LFp_i, L\alpha p_i\}$ observés, et $\{\hat{C}_1,...,\hat{C}_{N_u},\hat{a}_1,...,\hat{a}_{N_u}\}$ est l'ensemble des modulations et des amplitudes estimées ;

- ou bien encore, lorsque seules les modulations sont à estimer, un algorithme basé sur la minimisation de l'EQM (Erreur Quadratique Moyenne) entre les différents triplets $\{LAp_i, LFp_i, L\alpha p_i\}$ ou couples $\{MAp_i, MFp_i\}$ obtenus à partir du signal y(n), et la base de signatures préablement établie à partir de valeurs théoriques ou expérimentales :

$$\{\hat{C}_1, ..., \hat{C}_{N_u}\} = \min_{C_1, ..., C_{N_u}} \left\| \Pi - \Pi_{ref}^{C_1, ..., C_{N_u}} \right\|_2$$

Où $\{\hat{C}_1, ..., \hat{C}_{N_u}\}$ représente l'ensemble des modulations estimées pour les $N_u$ signaux présents dans la bande de

$$\Pi_{ref}^{C_1, ..., C_{N_u}}$$

fréquences considérée, représente la base de références des signatures, c'est à dire les valeurs des triplets {$LAp_i$, $LFp_i$, $L\alpha p_i$} établie préalablement pour différentes valeurs des paramètres constitutifs des modulations considérées en hypothèse {$C_1...,C_{N_u}$} et $\Pi$ représente l'ensemble des valeurs des triplets {$LAp_i$, $LFp_i$, $L\alpha p_i$} obtenus à partir du signal y(n).

Similairement, les fréquences porteuses résiduelles et les rythmes symboles moyens sont estimés à l'aide d'une méthode basée sur l'observation de l'ensemble des valeurs et $LFp_i$ (respectivement $MFp_i$). Conjointement, le nombre de signaux $N_u$ est éventuellement déterminé.

Références :

- [Guenther, 2010] : Guenther, B. (2010). Multi-User Signal Classification Via Cyclic (MsC Thesis) ;
- [Mazo, 1978] : Mazo, J. (1978). Jitter Comparison of Tones Generated by Squaring and by Fourth-Power Circuits. The Bell System Technical Journal ;
- [Proakis, 2007] : Proakis, J. (2007). Digital Communications 5th Edition. McGraw-Hill Education ;
- [Reichert Reichert, 1992] : J. (1992). Automatic Classification of Communication Signal using Higher Order Statistics. IEEE International Conference on Speech, Acoustics and Signal Processing ;
- [Swami & Sadler, 2000] : Swami, A., & Sadler, B. (2000). Hierarchical digital modulation classification using cumulants. IEEE Transactions on Communications ;
- [Zaerin & Seyfe] : Zaerin, M., & Seyfe, B. (2012). Multiuser modulation classification based on cumulants in additive white Gaussian noise channel. IET Signal Processing ;
- [Ramkumar, 2009] : Ramkumar (2009) Automatic Modulation Classification for Cognitive Radios using cyclic feature détection, IEEE Circuits and Systems Magazine, vol. 9, n°2, 1er avril 2009 ;
- [Wu, 2012] : Zhikiang Wu et al. (2012), Blind Cyclostationary Carrier Frequency and symbol rate estimation for underwater acoustic communication", IEEE International Conférence on Communication, pages 3482-3486 ;
- [Rebeiz, 2011]: Reibeiz et al. (2011), Low Complexity Feature-based Modulation Classifier and its Non-asymptotic analysis, IEEE Global Télécommunications Conférence, 5 décembre 2011, pages 1-5.

**Revendications**

1. Procédé d'estimation de paramètres d'un signal seul ou de signaux mélangés en fréquence dans une bande donnée, le procédé comprenant les étapes suivantes :

   - réception (E0) d'un signal seul ou d'un mélange de signaux y(t) dans une bande de fréquences donnée ;
   - détermination (E3) pour L, nombre réel strictement positif pris dans un ensemble de q, q strictement positif, valeurs prédéterminées {$L_1$; ... ;$L_q$} de la fonction de corrélation spectrale définie ci-dessous :

   $$LSCF_y(f, \alpha) \triangleq \sqrt[L]{\left| \mathcal{F}_\tau [R_{y^L}(\tau, \alpha)](f) \right|}$$

   $$R_{y^L}(\tau, \alpha) = \frac{1}{N} \sum_{n=0}^{N} y^L(n) y^{*L}(n - \tau) e^{-j2\pi\alpha n}$$

   où                                    est la fonction d'autocorrélation cyclique de l'élévation à la puissance L de la version échantillonné y(n) du signal y(t) et où $F_\tau$[.] est la transformée de Fourier et où, pour chaque q, $\alpha$ peut indépendamment prendre une ou plusieurs valeurs discrètes et/ou parcourir une ou plusieurs plages de valeurs ;

- traitement (E4) de chaque tranformation $L$SCFy(f,$\alpha$) L étant pris dans un ensemble de q, q strictement positif, valeurs prédéterminées {$L_1$; ... ;$L_q$} pour en extraire un ensemble de pics $p_i$, c'est-à-dire de maxima locaux détectés selon les variables f et $\alpha$ ou selon la seule variable f pour chaque valeur discrète de a, chacun de ces pics étant **caractérisé par** un triplet {$LAp_i$, $LFp_i$, $L\alpha p_i$} où $LFp_i$ et $L\alpha p_i$ sont respectivement la fréquence et la fréquence cyclique à laquelle il se situe et $LAp_i$ son amplitude ;
- identification (E5) de groupes de triplets {$LAp_i$, $LFp_i$, $L\alpha p_i$} comme étant la signature laissée par un ensemble de paramètres constitutifs de signaux présents dans la bande de fréquence donnée.

2. Procédé d'estimation selon la revendication 1, dans lequel l'étape de détermination (E3) est mise en oeuvre dans un premier temps, en considérant la fréquence cyclique $\alpha$ comme étant la valeur discrète nulle pour identifier des groupes de triplets {$LAp_i$, $LFp_i$, 0}, et

- dans un deuxième temps, en sélectionnant un ensemble de valeurs de l'ordre L et de valeurs discrètes ou de plages de variation de $\alpha\neq0$ déterminés en fonction des résultats de la première application du procédé.

3. Procédé selon l'une des revendications 1 ou 2, dans lequel la racine Lième du module de la transformée de Fourier est remplacée dans les formules de transformations spectrales par toute autre puissance ou un logarithme ou toute autre fonction réelle monotone du module de la transformée de Fourier.

4. Procédé d'estimation selon l'une des revendications 1 à 3, comprenant en outre un prétraitement du signal reçu comprenant les sous-étapes suivantes :

- détermination de la densité spectrale de puissance de y(n) ;
- traitement de la densité spectrale de puissance pour estimer le niveau de bruit contenu dans le mélange ;
- traitement de normalisation et de centrage du mélange de signaux à partir des caractéristiques précédemment obtenues, la détermination des fonctions LSCF pour certaines valeurs de L prises dans {$L_1$, ... $L_q$}, étant alors fondée sur le mélange normalisé et centré.

5. Procédé d'estimation selon l'une des revendications 1 à 4, dans lequel l'identification (E5) comprend une étape de comparaison de groupes de triplets {$LAp_i$, $LFp_i$, $L\alpha p_i$} obtenus à des signatures prédéterminées à l'avance, c'est à dire des triplets correspondant à un jeu d'hypothèses de paramètres constitutifs des signaux présents dans le mélange.

6. Procédé d'estimation selon l'une des revendications 1 à 5, dans lequel l'identification (E5) permet l'estimation des modulations et des amplitudes des signaux en mettant en oeuvre un algorithme de classification des pics selon la fréquence à laquelle ils sont situés puis une recherche par calcul de paramètres constitutifs du mélange créant des signatures ressemblantes aux groupes ainsi formés.

7. Procédé d'estimation selon la revendication 5 ou 6, dans lequel l'estimation des modulations et des amplitudes du mélange de signaux met en oeuvre un algorithme de recherche de maximum de vraisemblance des pics obtenus utilisant des modèles analytiques de signatures et de probabilité des écarts observés.

8. Procédé d'estimation selon la revendication 5 ou 6, dans lequel l'estimation des modulations de chacun des signaux met en oeuvre un algorithme qui recherche le minimum de l'Erreur Quadratique Moyenne (EQM) entre les différents triplets ou couples et une base de signatures préablement établie à partir de valeurs théoriques ou expérimentales.

9. Procédé d'estimation selon l'une des revendications précédentes, dans lequel les valeurs de L sont choisies en fonction des modulations présentes dans des normes de télécommunications considérées.

10. Procédé d'estimation selon l'une des revendications 1 à 9, dans lequel l'identification (E5) permet l'estimation des fréquences porteuses résiduelles et des rythmes symboles à partir des valeurs $LFp_i$.

11. Procédé d'estimation selon l'une des revendications 1 à 10, dans lequel l'identification (E5) permet l'estimation du nombre de signaux $N_u$ à partir des valeurs $LFp_i$.

**Patentansprüche**

1. Verfahren zum Schätzen von Parametern eines einzelnen Signals oder von frequenzgemischten Signalen in einem bestimmten Band, wobei das Verfahren die folgenden Schritte umfasst:

   - Empfangen (E0) eines einzelnen Signals oder einer Mischung von Signalen y(t) in einem bestimmten Frequenzband;
   - Bestimmen (E3) für L, strikt positive reelle Zahl, ausgewählt aus einer Einheit von q, wobei q strikt positiv ist, vorher festgelegte Werte {$L_1$; ...; $L_q$} der nachfolgend definierten spektralen Korrelationsfunktion:

$$LSCF_y(f, \alpha) \triangleq \sqrt[L]{\left| \mathcal{F}_\tau[R_{y^L}(\tau, \alpha)](f) \right|}$$

$$R_{y^L}(\tau, \alpha) = \frac{1}{N} \sum_{n=0}^{N} y^L(n) y^{*L}(n - \tau) e^{-j2\pi\alpha n}$$

   wobei die Funktion der zyklischen Autokorrelation der Potenz L der Stichprobenversion y(n) des Signals y(t) ist und wobei $F_T[.]$ die Fourier-Transformation ist und wobei für jedes q $\alpha$ unabhängig einen oder mehrere diskrete Werte annehmen und/oder einen oder mehrere Wertebereiche durchlaufen kann;
   - Verarbeiten (E4) jeder Transformation $LSCFy(f,\alpha)$, wobei L aus einer Einheit von q ausgewählt ist, wobei q strikt positiv ist, vorher festgelegte Werte {$L_1$; ...; $L_q$}, um daraus eine Einheit von Spitzen $p_i$ zu extrahieren, das heißt, von lokalen Maxima, detektiert gemäß den Variablen f und $\alpha$ oder gemäß der einzigen Variablen f für jeden diskreten Wert von $\alpha$, wobei jede dieser Spitzen durch ein Triplett {$LAp_i$, $LFp_i$, $L\alpha p_i$} gekennzeichnet ist, wobei $LFp_i$ und $L\alpha p_i$ jeweils die Frequenz und die zyklische Frequenz sind, auf dem sie sich befindet und $LAp_i$ ihre Amplitude;
   - Identifizierung (E5) von Triplettgruppen {$LAp_i$, $LFp_i$, $L\alpha p_i$} als die Signatur einer Einheit von Parametern, bestehend aus Signalen, die in dem bestimmten Frequenzband vorhanden sind.

2. Schätzverfahren nach Anspruch 1, wobei der Bestimmungsschritt (E3) zunächst unter Beachtung der zyklischen Frequenz $\alpha$ als diskreter Wert Null zur Identifizierung der Triplettgruppen {$LAp_i$, $LFp_i$, 0} durchgeführt wird, und

   - danach, bei Auswahl einer Werteeinheit in der Größenordnung von L und von diskreten Werten oder von Schwankungsbereichen von $\alpha \neq 0$, bestimmt in Abhängigkeit von den Ergebnissen der ersten Anwendung des Verfahrens.

3. Verfahren nach einem der Ansprüche 1 oder 2, wobei die L-te Wurzel des Moduls der Fourier-Transformation in den Spektraltransformationsformeln durch jede andere Potenz oder einen Logarithmus oder jede andere monotone reelle Funktion des Moduls der Fourier-Transformation ersetzt wird.

4. Schätzverfahren nach einem der Ansprüche 1 bis 3, umfassend ferner eine Vorverarbeitung des empfangenen Signals, umfassend die folgenden Unterschritte:

   - Bestimmen der spektralen Leistungsdichte von y(n);
   - Verarbeiten der spektralen Leistungsdichte zwecks Schätzung des in der Mischung enthaltenen Rauschniveaus;
   - Standardisierungs- und Zentrierungsverarbeitung des Signalgemischs auf der Basis zuvor erhaltener Merkmale, wobei die Bestimmung der LSCF-Funktionen für bestimmte Werte von L aus {$L_1$; ... $L_q$} dann auf der standardisierten und zentrierten Mischung beruht.

5. Schätzverfahren nach einem der Ansprüche 1 bis 4, wobei die Identifizierung (E5) einen Vergleichsschritt von Triplettgruppen {$LAp_i$, $LFp_i$, $L\alpha p_i$} umfasst, erhalten bei zuvor vorbestimmten Signaturen, das heißt der Tripletts, die einem Satz von Hypothesen von Parametern entsprechen, die aus Signalen bestehen, die in der Mischung vorhanden sind.

6. Schätzverfahren nach einem der Ansprüche 1 bis 5, wobei die Identifizierung (E5) die Schätzung der Modulationen und der Amplituden der Signale durch Anwendung eines Klassifizierungsalgorithmus der Spitzen gemäß der Frequenz erlaubt, auf der sie sich befinden, dann eine Suche durch Berechnung von Parametern als Bestandteil der Mischung, wodurch Signaturen gebildet werden, welche den derart gebildeten Gruppen ähneln.

7. Schätzverfahren nach Anspruch 5 oder 6, wobei die Schätzung der Modulationen und Amplituden des Signalgemischs einen Algorithmus der Ermittlung der maximalen Wahrscheinlichkeit der erhaltenen Spitzen durchführt, der analytische Signatur- und Plausibilitätsmodelle der beobachteten Abweichungen verwendet.

8. Schätzverfahren nach Anspruch 5 oder 6, wobei die Schätzung der Modulationen von jedem der Signale einen Algorithmus durchführt, der das Minimum des mittleren quadratischen Fehlers (EQM) zwischen den verschiedenen Tripletts oder Paaren und einer zuvor auf der Basis von theoretischen oder experimentellen Werten erstellten Signaturbank ermittelt.

9. Schätzverfahren nach einem der vorangehenden Ansprüche, wobei die Werte von L in Abhängigkeit von den Modulationen ausgewählt sind, die in den entsprechenden Telekommunikationsnormen vorhanden sind.

10. Schätzverfahren nach einem der Ansprüche 1 bis 9, wobei die Identifizierung (E5) das Schätzen der restlichen Trägerfrequenzen und der Symbolrhythmen auf der Basis der Werte $LFp_i$ erlaubt.

11. Schätzverfahren nach einem der Ansprüche 1 bis 10, wobei die Identifizierung (E5) das Schätzen der Anzahl von Signalen $N_u$ auf der Basis der Werte $LFp_i$ erlaubt.

**Claims**

1. A method for estimating of parameters of a single signal or mixed-frequency signals in a given band, the method comprising the following steps:

   - receiving (E0) a single signal or mixture of signals y(t) in a given frequency band;
   - determining (E3) for L, strictly positive real number taken in a set of q, q strictly positive, predetermined values $\{L_1; ...; L_q\}$ of the function of spectral correlation defined hereinbelow:

$$LSCF_y(f, \alpha) \triangleq \sqrt[L]{\left|\mathcal{F}_\tau[R_{y^L}(\tau, \alpha)](f)\right|}$$

$$R_{y^L}(\tau, \alpha) = \frac{1}{N} \sum_{n=0}^{N} y^L(n) y^{*L}(n - \tau) e^{-j2\pi\alpha n}$$

   where                                                                    is the cyclic autocorrelation function of elevation to the power L of the sampled version y(n) of the signal y(t) and where Fτ[.] is the Fourier transform and where, for each q, $\alpha$ can independently assume one or more discrete values and/or pass through one or more ranges of values;
   - processing (E4) each transformation LSCFy(f,$\alpha$) L being taken in a set of q, q strictly positive, predetermined values $\{L_1; ...; L_q\}$ to extract therefrom a set of peaks $p_i$, that is, local maxima detected according to the variables f and $\alpha$ or according to the sole variable f for each discrete value of a, each of these peaks being **characterized by** a triplet $\{LAp_i, LFp_i, L\alpha p_i\}$ where $LFp_i$ and $L\alpha p_i$ are respectively the frequency and the cyclic frequency at which it is located and $LAp_i$ its amplitude;
   - identifying (E5) groups of triplets $\{LAp_i, LFp_i, L\alpha p_i\}$ as being the signature left by a set of parameters constituting signals present in the given frequency band.

2. The method according to claim 1, wherein the determining step (E3) is conducted initially by considering the cyclic frequency $\alpha$ as being the zero discrete value for identifying groups of triplets $\{LAp_i, LFp_i, 0\}$, and

   - secondly, by selecting a set of values of the order L and of discrete values or ranges of variation of $\alpha \neq 0$ determined as a function of the results of the first application of the method.

3. The method according to any one of claims 1 or 2, wherein the $L^{th}$ root of the module of the Fourier transform is replaced in the formulas of spectral transformations by any other power or a logarithm or any other real monotonous function of the module of the Fourier transform.

4. The method according to any one of claims 1 to 3, also comprising pre-processing of the signal received comprising the following sub-steps:

   - determining the spectral density of power of y (n) ;
   - processing the spectral density of power for estimating the level of noise contained in the mixture;
   - processing standardization and centering of the mixture of signals from the previously obtained characteristics, determination of functions LSCF for some values of L taken in $\{L_1, ... L_q\}$, being then based on the standardized and centered mixture.

5. The method according to any one of claims 1 to 4, wherein the identifying step (E5) comprises a step of comparing groups of triplets $\{LAp_i, LFp_i, L\alpha p_i\}$ obtained at signatures predetermined in advance, that is, triplets corresponding to a set of assumptions of parameters constituting the signals present in the mixture.

6. The method according to any one of claims 1 to 5, wherein the identifying step (E5) allows estimation of the modulations and of amplitudes of signals by executing an algorithm for classification of the peaks according to the frequency at which they are located, then a search by calculation of parameters constituting the mixture creating signatures resembling the groups formed in this way.

7. The method according to claim 5 or 6, wherein the estimation of modulations and amplitudes of the mixture of signals executes an algorithm searching for maximum probability of peaks obtained using analytical models of signatures and probability of spreads observed.

8. The method according to claim 5 or 6, wherein the estimation of modulations of each of the signals executes an algorithm which searches for the minimum Mean-Squared Error (MSE) between the different triplets or couples and a database of signatures previously set up from theoretical or experimental values.

9. The method according to any one of the preceding claims, wherein the values of L are selected as a function of modulations present in standards of considered telecommunications.

10. The method according to any one of claims 1 to 9, wherein the identifying step (E5) allows estimation of residual carrier frequencies and symbol rhythms from the values $LFp_i$.

11. The method according to any one of claims 1 to 10, wherein the identifying step (E5) allows estimation of the number of signals $N_u$ from the values $LFp_i$.

**FIG. 1**

FIG. 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **RAMKUMAR.** *fonction d'autocorrélation cyclique (en anglais, « Cyclic Autocorrelation Function » (CAF),* 2009
- *fonction de corrélation spectrale [en anglais, « Spectral Correlation Function » (SCF)*
- *fonction de cohérence spectrale (en anglais, « Spectral Coherence Function » (SOF)*
- **REICHERT.** *s'appuie sur la transformée MPT (en anglais, « Mth Power nonlinear Transform »),* 1992
- **REBEIZ.** *extrait de manière non-aveugle des pics de la SOF,* 2011
- **ZAERIN ; SEYFE.** *méthode d'estimation des modulations basée sur des « cumulants » d'ordres supérieurs,* 2012
- **GUENTHER.** *fonction spectrale de corrélation (en anglais « Spectral Correlation Function », (SCF),* 2010
- **GUENTHER, B.** *Multi-User Signal Classification Via Cyclic (MsC Thesis),* 2010
- **MAZO, J.** Jitter Comparison of Tones Generated by Squaring and by Fourth-Power Circuits. *The Bell System Technical Journal,* 1978
- **PROAKIS, J.** Digital Communications 5th Edition. McGraw-Hill Education, 2007
- **REICHERT REICHERT.** Automatic Classification of Communication Signal using Higher Order Statistics. *IEEE International Conference on Speech, Acoustics and Signal Processing,* 1992
- **SWAMI, A. ; SADLER, B.** Hierarchical digital modulation classification using cumulants. *IEEE Transactions on Communications,* 2000
- **ZAERIN, M. ; SEYFE, B.** Multiuser modulation classification based on cumulants in additive white Gaussian noise channel. *IET Signal Processing,* 2012
- **RAMKUMAR.** Automatic Modulation Classification for Cognitive Radios using cyclic feature détection. *IEEE Circuits and Systems Magazine,* 01 Avril 2009, vol. 9 (2
- **ZHIKIANG WU et al.** Blind Cyclostationary Carrier Frequency and symbol rate estimation for underwater acoustic communication. *IEEE International Conférence on Communication,* 2012, 3482-3486
- **REIBEIZ et al.** Low Complexity Feature-based Modulation Classifier and its Non-asymptotic analysis. *IEEE Global Télécommunications Conférence,* 05 Décembre 2011, 1-5